# EUROPEAN PATENT APPLICATION

(11) **EP 1 205 934 A2**
(43) Date of publication of application: **15.05.2002**
(21) Application number: 01126443.9
(22) Date of filing: 08.11.2001
(51) Int. Cl.: G11B 27/32

(54) **Recording/reproducing apparatus**

(30) Priority: 08.11.2000 JP 2000340816; 08.11.2000 JP 2000340817
(71) Applicant: Kabushiki Kaisha Toshiba, Tokyo 105-8001 (JP)
(72) Inventor: Gunji, Masanori, Minato-ku, Tokyo 105-8001 (JP); Kataoka, Hideo, Minato-ku, Tokyo 105-8001 (JP); Yoneyama, Takahisa, Minato-ku, Tokyo 105-8001 (JP)
(74) Representative: HOFFMANN - EITLE

(57) **Abstract**

When a program (title) is divided into a plurality of chapters, an actual program is reproduced in a moving picture reproduction region. When a chapter boundary is determined, and an Enter key of a remote controller is operated by pointing a cursor to "divide" in a button region, a thumb nail is displayed in a thumb nail display region. In this manner, a chapter can be easily visually created.

## Description

The present invention relates to a recording/reproducing apparatus capable of singly handing a recording medium such as a hard disk and a DVD (Digital Versatile Disk) capable of recording/reproducing information at the same time or separately. More particularly, the present invention relates to a recording/reproducing apparatus adding a chapter creating guide function such that a guide display enabling a user to easily set a chapter of a title (program) can be obtained.

Further, the present invention relates to the above recording/reproducing apparatus adding a play list creating guide function such that a guide display enabling a user to easily set reproduction sequence information (play list) of a program (chapter or title) can be obtained in particular.

As well known, in recent years, there has been developed an optical reproducing apparatus which handles a moving picture for reproducing an optical disk having data such as picture or voice recorded therein. This apparatus is generally popular for the purpose of enjoying cinema software, karaoke music and the like as an LD (Laser Disk), a video CD (Compact Disk) reproducing apparatus and the like.

Of them, at present, there is proposed a DVD standard using an MPEG (Moving Picture Image Coding Experts Group) 2 scheme and employing an AC (Audio Compression) - 3 audio compression scheme.

This standard supports the MPEG 2 scheme for a moving picture compression scheme in accordance with an MPEG 2 system layer, and supports an AC-3 audio compression scheme and an MPEG audio compression scheme for a voice compression scheme. Further, subsidiary picture data having bit map data run-length compressed can be handled as caption for cinema, karaoke music and the like. Further, this standard additionally configures specific reproduction control data (navigation pack) such as fast-forward reproduction or fast rewinding/reproduction in relation with a reproducing apparatus.

Furthermore, this standard supports a standard for ISO (International Organization for Standardization) 96 and a micro UDF (Universal Disk Format) so that computer can read disk data.

As a standard for a medium itself, a standard for DVD-RAM (Random Access Memory) [about 4.7 GB Giga Bytes] in recording capacity] is completed after a standard for DVD-ROM (Read Only Memory) which is a DVD-video medium, and a DVD-RAM drive is being known as a computer periphery.

Moreover, at present, a DVD video standard achieving a system capable of recording/reproducing information in a real time using a DVD-RAM, namely, an RTR (Real Time Recording)-DVD standard is being completed, and verification work will be finished in the near future.

This standard is designed based on the already released DVD-video standard. Further, a file system corresponding to the RTR-DVD is currently standardized.

On the other hand, a scheme of recording/reproducing a broadcast signal is also designed by using a hard disk drive unit (HDD) incorporated in a recording/reproducing apparatus. The hard disk drive unit enables data recording of 100 GB or more.

In the above hard disk drive unit and DVD system, like a conventional VTR (Video Tape Recorder), a reservation recording function can be feasibly provided. These recording media each have a large storage capacity, and thus, are capable of recording a number of programs (chapter or title) or a long time program (title).

When a long time program has been recorded, a user often wants to set a chapter. Conventionally, however, there is no technique for easily creating a chapter. When a number of programs have been recorded, the user often wants to set a chapter or edit a reproduction sequence. Conventionally, there is no technique for easily creating such edit.

The present invention has been made in view of the circumstance described above. It is an object of the present invention to provide a recording/reproducing apparatus with a chapter creation guide function capable of easily creating a chapter while checking the chapter on a screen.

Further, it is another object of the present invention to provide a recording/reproducing apparatus with a play list creation guide function capable of easily creating management information (play list) on a chapter or title reproduction sequence so that editing can be easily carried out while checking a thumb nail on a screen.

According to one aspect of the present invention, there is provided a recording/reproducing apparatus for controlling information recording and reproducing process by driving a recording medium having at least a video information recording region in which video information including a program is recorded, a video management information recording region in which management information for recording/reproducing the video information is recorded, and a region for recording chapter management information for managing each chapter of the program, comprising:
a display signal control section outputting a display signal obtained from the video information to a display;
a first setting section setting a moving picture reproducing region for the program selected based on the video management information on a screen of the display;
a second setting section setting a thumb nail display region for displaying one or more thumb nails as a typical picture of a set chapter on the screen of the display;
a third setting section setting a button region for indicating a chapter boundary in the moving picture reproducing region during program reproduction;
a command assignment section assigning a command for specifying a chapter boundary with a cursor being moved to the button region when a desired image is displayed in the moving picture reproducing region;
a creation section creating the chapter management information for specifying the start and end of a chapter when the command for specifying a chapter boundary is assigned; and
a recording section creating an image at the start of the set chapter as a still picture, creating the thumb nail management information, and recording the created information in the recording medium.

With the configuration described above, a chapter can be easily created while checking the start and end of the chapter on one screen, and a thumb nail is created, thus making it possible to easily identify the number of created chapters or the contents at the start of the chapter.

According to one aspect of the present invention, there is provided a recording/reproducing apparatus for controlling information recording and reproducing process by driving a recording medium having at least a video information recording region in which video information including a plurality of programs is recorded, a video management information recording region management information for recording/reproducing the video information is recorded, and a region for recording program management information for managing a reproduction sequence of the program, comprising:
a display signal control section outputting a display signal obtained from the video information to a display;
a setting section setting a thumb nail display region for displaying a plurality of thumb nails as a typical picture of a plurality of programs on a screen of the display;
a thumb nail display section setting a selected thumb nail display region on the screen of the display, and displays the selected thumb nails in specified order from among a plurality of thumb nails on the region; and
a play list constructing section making an enter operation while desired selected thumb nails are displayed in the selected thumb nail display region, thereby creating a new play list for reproducing programs corresponding to each thumb nail in order of arrangement of the selected thumb nails, and registering the created play list as program management information.

With the construction described above, thumb nails of programs (chapters or titles) are created, and the thumb nails are displayed and arranged on the screen, thereby making it possible to easily create a play list.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block structural diagram illustrating a recording/reproducing apparatus according to one embodiment of the present invention;
FIG. 2 is a view illustrating a hierarchical structure of a video manager VMG in the embodiment;
FIG. 3 is a view illustrating details on a program chain information table PGIT in the embodiment;
FIG. 4 is a view illustrating a hierarchical structure of a movie AV file information table M_AVFIT in the embodiment;
FIG. 5 is a view illustrating a remote controller for a user to provide operational information to a recording/reproducing apparatus in the embodiment;
FIG. 6 is a view illustrating a display screen when operating an edit navigation key of a remote controller in the embodiment;
FIG. 7 is a view illustrating an example of a chapter creation screen when a chapter creation is selected in the embodiment;
FIG. 8 is a view illustrating a screen transition state during chapter creation in the embodiment;
FIG. 9 is a view illustrating a screen transition state during chapter deletion in the embodiment;
FIG. 10 is a flowchart illustrating an operation of charter creation in the embodiment
FIG. 11 is a view illustrating details on a thumb nail data table in the embodiment;
FIG. 12 is a view illustrating an example of a play list edit screen when play list edit is selected in the embodiment;
FIG. 13 is a view illustrating an example of a preview reproduction screen for selected parts in the embodiment;
FIG. 14 is a view illustrating a screen transition state when a thumb nail selected from among a plurality of thumb nails in the embodiment is added in a selected thumb nail display region;
FIG. 15 is a view illustrating a screen transition state when a desired thumb nail is deleted from a plurality of thumb nails in the embodiment;
FIG. 16 is a view illustrating a screen transition state when arrangement of a plurality of thumb nails are moved in the embodiment; and
FIG. 17 is a view illustrating a screen transition state when a title thumb nail display and a chapter thumb nail display are switched to each other in the embodiment.

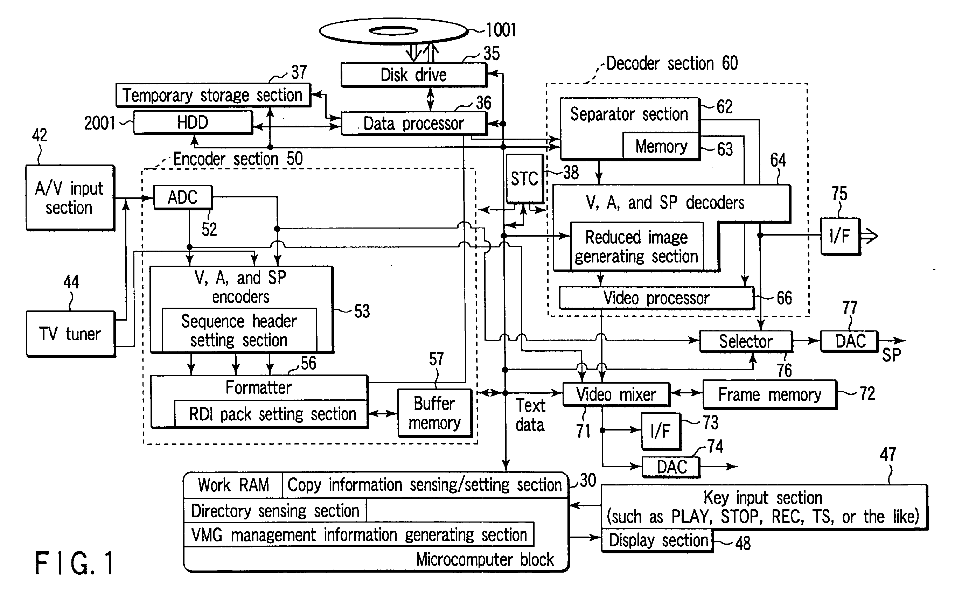

Hereinafter, one embodiment of the present invention will be described in detail with reference to the accompanying drawings. FIG. 1 shows a recording/reproducing apparatus for illustrating in this embodiment. In this embodiment, a recording/reproducing apparatus capable of handing both of DVD-RAM and hard disk as a recording medium is shown. The present invention is also applicable to a device handling any one of these two recording media.

When each block shown in FIG. 1 is roughly divided, main blocks of a recording section are shown at the left, and main blocks of a reproducing section are shown at the right.

A reproducing process in the recording/reproducing apparatus shown in FIG. 1 is carried out in accordance with program chain information (PGCI) showing a program reproduction sequence. In this PGCI, a plurality of programs (PG) can be specified, and cell information (CI) is defined for the PGCI.

A cell entry point (C_EPI) is specified by CI, and VOB targeted for reproduction is specifically defined. A specific PGC to be reproduced in recording order is referred to as an original PGC, and information on this original PGC is recorded as ORG_PGCI.

Further, video data attribute information (such as resolution information, aspect information, or voice attribute information) at this time is recorded as stream information (STI) in VMGI.

A pack is a minimal unit for carrying out data transfer processing. Further, the minimum unit for carrying out logical processing is based on cells, and logical processing is carried out in this unit. Therefore, when recording is carried out, a record signal is converted into a form conforming to the above format.

The recording/reproducing apparatus mainly comprises: a hard disk drive unit 2001; a disk drive 35 which rotatably drives an optical disk 1001 which is an information storage medium capable of constructing a video file and executes information reading from/writing into this optical disk 1001; an encoder section 50 which configures a recording side; a decoder section 60 which configures a reproducing side; and a microcomputer block 30 which controls an operation of the apparatus main body.

The encoder section 50 comprises: encoders 53 including an ADC (analog digital converter) 52, a V (video) encoder, an A (audio) encoder and an SP (subsidiary picture) encoder; a formatter 56 which converts an output of each encoder into a predetermined format; and a buffer memory 57.

To the ADC 52, an external analog video signal and an external analog audio signal from an AV input section 42, or an analog video signal and an analog voice signal from a TV (television) tuner 44 are inputted.

The ADC 52 digitizes the inputted analog video signal at a sampling frequency of 13.5 MHz or at 8 quantizing bits, for example. That is, a luminance component Y, a color aberration component Cr (or Y - R), and a color aberration component Cb (or Y - B) are quantized at 8 bits, respectively.

Similarly, the ADC 52 digitizes the input analog audio signal at a sampling frequency of 48 kHz and a 16 quantizing bits, for example.

When a digital video signal or a digital audio signal is inputted to the ADC 52, the ADC 52 through-passes the digital video signal or digital audio signal. Then, jitter reduction processing, sampling rate change processing and the like may be carried out for these digital video signal and digital audio signal as well without changing the contents.

The digital video signal outputted from the ADC 52 is delivered to the formatter 56 via the V encoder. Further, the digital audio signal outputted from the ADC 52 is delivered to the formatter 56 via the A encoder.

The V encoder has a function which converts the inputted digital video signal into a digital signal compressed at a variable bit rate based on the MPEG 2 or MPEG 1 standard. The A encoder also has a function which converts the inputted digital audio signal into a digital signal or linear PCM digital signal compressed at a fixed bit rate based on the MPEG or AC-3 standard.

When subsidiary picture information (for example, a signal from a DVD video player with an independent output terminal for a subsidiary picture signal) is inputted from the AV input section 42 or when a DVD video signal with such a data configuration is broadcast, and the broadcast video signal is received by the TV tuner 44, the subsidiary picture signal (subsidiary picture pack) in the DVD video signal is inputted to the SP encoder. The subsidiary picture signal inputted to the SP encoder is arranged in a predetermined signal format, and the arranged signal is delivered to the formatter 56.

This formatter 56 carries out predetermined signal processing for the inputted video signal, audio signal, and subsidiary picture signal and the like while the buffer memory 57 is used as a work area, whereby record data conforming to a predetermined DVD format (file structure) is outputted to a data processor 36.

Here, this recording/reproducing apparatus can supply the information encoded by the encoder 50 and the created management information to the hard disk drive unit 2001 via the data processor 36, and record them in a hard disk. Also, the information recorded in the hard disk can be recorded in the optical disk 1001 via the data processor 36 and the disk drive 35.

Further, This apparatus can also record the information encoded by the encoder section 50 and the created management information in the optical disk 1001 via the data processor 36 and the disk drive 35.

When the information recorded in a hard disk of the hard disk drive unit 2001 conforms to a data format of the optical disk 1001, this recording/reproducing apparatus can record the information in the hard disk in the optical disk 1001 without subjecting the information to encode processing.

Further, when the information recorded in the hard disk of the hard disk drive unit 2001 does not conform to the data format of the optical disk 1001, the encoder section 50 encodes the information read out from the hard disk. Then, the encoded information can be recorded in the optical disk 1001.

Now, a brief description is given with respect to standard encode processing contents for generating record data in the above optical disk 1001. That is, when encode processing is started at the encoder section 50, parameters required for encoding video (main picture) data and audio data are set.

Next, the main picture data is pre-encoded by using the set parameters, whereby a distribution of an optimal code quantity for a set average transfer rate (record rate) is computed. Encode processing of main picture data is executed based on the code quantity distribution obtained by pre-encode processing.

At this time, encode processing for audio data is also executed at the same time. Similarly, parameters required for encoding subsidiary picture data are set, and the encoded subsidiary picture data is created.

The encoded main picture data, audio data, and subsidiary picture data are combined with each other, and the combined data is converted into a structure of a video object set VOBS.

That is, cells are set as a minimum unit of main picture data (video data), and cell information is created. Next, a configuration of cells each configuring a program chain PGC or attributes of main picture, subsidiary picture, audio and the like is set (information obtained when each item of data is encoded is used as part of these items of arbitrary information), and then, a VMG file including a variety of information is created.

The encoded main picture data, audio data, and subsidiary picture data are finely divided into a pack of a predetermined size (2048 bytes). In this pack, time stamps such as a PTS (presentation time stamp) indicating a reproduction time or a DTS (decoding time stamp) indicating a decoding time are described as required. For a subsidiary picture PTS, main picture data in the same reproduction time interval or a time arbitrarily delayed by an audio data PTS can be described.

Then, cells are disposed so that data can be reproduced in order of time codes while an RDI pack (corresponding to a navigation pack) is disposed at the head in units of video object unit VOBU. In this manner, a video object VOB composed of a plurality of cells is configured. A video object set VOBS which collects one or a plurality of the video objects VOB is recorded as a problem in a movie video file.

When a DVD reproduction signal is digitally copied from the DVD video player, the contents of the above cells, program chain, management table, time stamp and the like are predetermined, and there is no need to create these contents.

As elements which executes information reading/writing (recording and/or reproducing) for the optical disk 1001, there are provided: the disk drive 35 having an optical system and a driving system; the data processor 36; the temporary storage section 37; and an STC (system time counter or system time clock) 38.

The temporary storage section 37 is used for buffering a predetermined quantity of data to be written into the optical disk 1001 via the data processor 36 and the disk drive 35 (data to be outputted from the encoder section 50) or buffering a predetermined quantity of data reproduced from the optical disk 1001 via the disk drive 35 and the data processor 36 (data to be inputted to the decoder section 60). The disk drive 35 has a rotation control system, a laser drive system, an optical signal and the like relevant to the optical disk 1001.

For example, when the temporary storage section 37 is composed of a semiconductor memory (DRAM) of 4 MB (Mega bytes), about 8-second buffering of recording and reproduction data at an average recording rate of 4 Mbps (bit per seconds) is possible. When the temporary storage section 37 is composed of an EEP (electrically erasable and programmable) ROM (flash memory) of 16 MB, about 30-second buffering of recording or reproduction data at an average recording rate of 4 Mbps is possible.

In addition, when the temporary storage section 37 is composed of a micro HDD (hard disk drive) of 100 MB, about 3-minutes buffering of recording or reproduction data at an average recording rate of 4 Mbps is possible.

When the optical disk 1001 is used up in the middle of recording, the temporary storage section 37 can be used to temporarily store recording information for a short time until the optical disk 1001 is replaced with a new disk.

However, in this recording/reproducing apparatus, since the hard disk drive unit 2001 having a large capacity is provided, this drive unit can be used.

Further, when a high speed drive (with a speed of x2 or more) is employed as the disk drive 35, the temporary storage section 37 can also be used to temporarily store data redundantly read out from a general drive within a predetermined time. If read data during reproduction is buffered in the temporary storage section 37, even when a read error occurs with an optical head (not shown) due to a vibration shock or the like, the reproduction data buffered in the temporary storage section 37 is replaced and used, whereby a reproduction picture is prevent from being discontinuous.

The data processor 36 supplies the DVD recording data outputted from the encoder section 50 to the disk drive 35 in accordance with a control of the microcomputer block 30; captures a DVD reproducing signal reproduced from the optical disk 1001 from the disk drive 35; rewrites management information recorded in the optical disk 1001; and deletes data (file or video object) recorded in the optical disk 1001.

The microcomputer 30 includes an MPU (micro-processing unit) or a CPU (central processing unit); a ROM having a control program or the like written therein; and a RAM for providing a work area required for program execution.

The MPU of the microcomputer block 30 having received operational information from a key input section 47 uses the RAM as a work area based on the control program stored in the ROM, and executes fault detection, unrecorded region detection, recording information/recording location setting, UDF recording, AV address setting or the like.

Also, the microcomputer block 30 has an information processing section required for controlling the entire system, and comprises a copy information detecting/setting section, a directory sensing section, and a VMG management information generating section.

Of the MPU execution results, the contents of the disk drive 35 to be notified to a user are displayed on a display section 48 of a VD video recorder or are displayed on a monitor display (not shown) in an OSD (on-screen display) manner.

The microcomputer block 30 can executes a timing of controlling the disk drive 35, data processor 36, encoder section 50 and/or decoder section 60 and the like based on time data from the STC 38. Although recording or reproducing operation is generally executed in synchronism with a time clock from the STC 38, other processings may be executed at a timing independent of the STC 38.

The decoder section 60 comprises: a separator 62 which separately removes packs each from picture information having a pack structure; a memory 63 used during pack separation or execution of the other signal processing; a V decoder which decodes main picture data (contents of a video pack) separated by the separator 62; an SP decoder which decodes subsidiary picture data (contents of a subsidiary picture pack) separated by the separator 62; decoders 64 composed of an A decoder which decodes audio data (contents of an audio pack) separated by the separator 62; and a video processor 66 which properly composes subsidiary picture data obtained from the SP decoder with the main picture data obtained from the V decoder and which superimposes and outputs the menu, highlight buttons, caption, or other subsidiary pictures on the main picture.

An output of the video processor 66 is inputted to a video mixer 71. Text data is composed in the video mixer 71. A line which directly captures a signal from the TV tuner 44 or A/V input section 42 is also connected to the video mixer 71.

A frame memory 72 used as a buffer is connected to the video mixer 71. When an output of the video mixer 71 is a digital output, the digital output is delivered to the outside via an interface (I/F) 73. In case of an analog output, the analog output is delivered to the outside via a DAC 74.

When an output of the A decoder is a digital output, the digital output is delivered to the outside via an interface (I/F) 75. In case of an analog output, the analog output is analog converted by a DAC 77 via a selector 76 to be delivered to the outside.

When a signal from the TV tuner 44 or A/V input section 42 is directly monitored by a select signal from the microcomputer block 30, the selector 76 can also select an output from the ADC 52. An analog audio signal is supplied to an external component (multichannel stereo device having two to six channels) (not shown).

In the above described device, a flow of a video signal will be briefly described as follows. First, an inputted AV signal is digitally converted by the ADC 52. The video signal is inputted to the V encoder, an audio signal is inputted to the A encoder, and character data such as character broadcast is inputted to the SP encoder. A video signal is compressed by MPEG, an audio signal is subjected to AC-3 compression or MPEG audio compression, and character data is subjected to run length compression.

The compression data from each encoder is produced as a packet so as to be 2048 bytes when the data is packed, and is inputted to the formatter 56. Each packet is packed in the formatter 56, is further multiplied, and is delivered to the data processor 36.

Here, the formatter 56 creates an RDI pack based on aspect information, and disposes the created pack at the head of the video object unit (VOBU). The data processor 36 forms an ECC block every 16 packs, provides error correction data, and records the output to the optical disk 1001 via the disk drive 35.

When the disk drive 35 enters a busy state because of seeking or track jump and the like, the drive is stored in the temporary storage section 37 (for example, an HDD buffer section), and waits until the DVD-RAM drive section (disk drive 35) is ready.

Further, the formatter 56 creates isolation information during recording, and periodically delivers the information to the MPU of the microcomputer block 30 (information during GOP start interrupt or the like).

The isolation information includes the number of VOBU packs, an end address of an I picture from the start of the VOBU, and a VOBU reproduction time or the like.

At the same time, aspect information is delivered to the MPU when recording starts, and the MPU creates the VOB stream information (STI). Here, STI stores resolution data, aspect data and the like, and each decoder section provides initial settings based on these items of information during reproduction.

In the recording/reproduction DVD, one video file is assigned to one disk.

In a real time recording/reproduction machine using a DVD, it should be noted that, when data is accessed, while the access (seek) is in progress, minimally continuous sectors are required in order to continue reproduction without any interrupt. This unit is referred to as a CDA (continuous data area). Namely, this is a data size predetermined to achieve seamless reproduction.

This CDA is advantageous in units of ECC blocks. Thus, the CDA size is set to a multiple of 16 sectors, and recording is carried out in units of the CDA in a file system. However, when a free space equal to the size of the CDA is not sufficiently provided in a disk, a short sector used by another file is permitted to enter the CDA. Therefore, recording can be carried out in units of CDA.

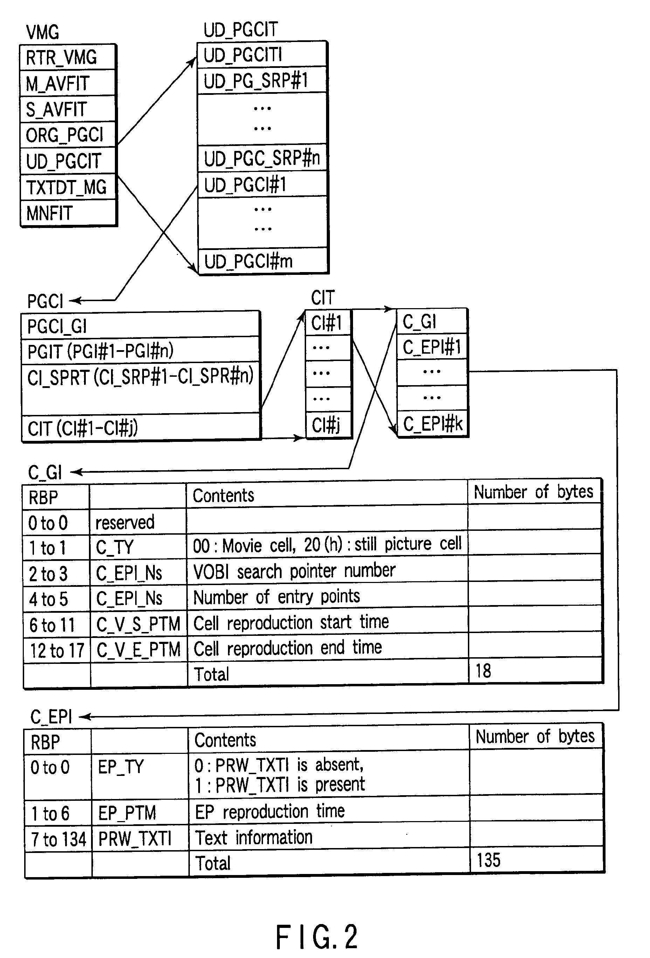

FIG. 2 shows a hierarchical structure of a video manager (VMG), and shows a system of managing a data reproduction sequence in this structure in detail.

The data reproduction sequence recorded in a video file is defined by a program chain (PGC) as shown in FIG. 2. Cells are defined in this program chain, and further, a VOB targeted to be reproduced is defined in cells each.

A portion having the PGC specific information recorded therein corresponds to a portion of program chain information (PGCI) in a VMG file. There are two types of PGCI. One is original PGCI (ORG_PGCI), and the other is a user defined PGC table (UD_PGCIT).

This UD_PGC is defined as information managed by a user selecting a part of ORG_PGC, thereby arbitrarily connecting the selected parts (chapters or titles) to each other, and is also referred to as a play list. This UD_PGC can be created in plurality.

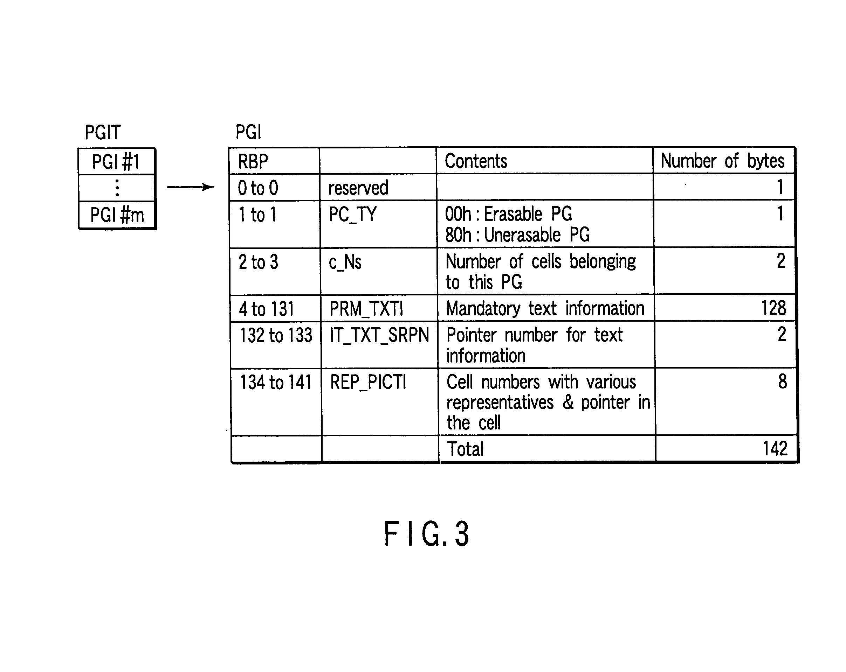

FIG. 3 shows the contents of a program chain information table (PGIT) in the above program chain information (PGCI) in detail. As program chain information, there are described: a program type (PG_TY) indicating whether or not a program corresponding to a program chain is erasable; the number of cells in the program (c_Ns); primary text information (PRM_TXTI) described by the program; text information pointer number (IT_TXT_SRPN); and typical image information (REP_PICTI = cell number and pointer in the cell).

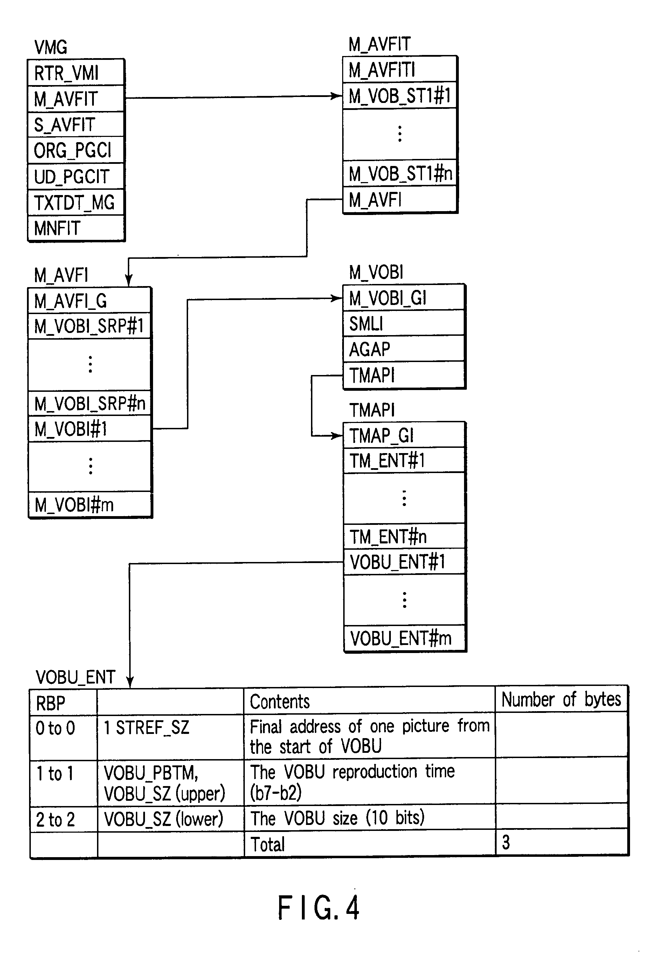

Further, FIG. 4 hierarchically shows a movie AV file information table (M_AVFIT) contained in the video manager (VMG). The information in this table is recorded as stream information (M_VOB_STI) such as the number of recorded VOB (programs), stream numbers of audio or subsidiary picture corresponding to each VOB, or attributes of each VOB (television scheme or aspect ratio).

Further, in M_AVFI, as general information, information indicating whether VOB can be reproduced or has been temporarily erased, or alternatively, date and time information (recording time) when VOB is recorded is described. Further, as individual information, system clock information which is information (SMLI) for continuously reproducing the search pointer of each VOB and a plurality of VOBs is described.

Furthermore, time map information (TMAPI) on the VOBU in the VOB is described. The time map information can be used when special reproduction or the like is carried out.

A play list creation guide function is provided at this recording/reproducing apparatus. A thumb nail is used for creating a play list. In this recording/reproducing apparatus, the thumb nail is automatically produced by carrying out chapter creation, for example.

Now, a chapter creation guide function will be described here. When a title is divided into a plurality of chapters, this chapter creation guide function is designed to be executed by visually checking the start and end images of a chapter at a display section (display) while reproducing an actual title (program).

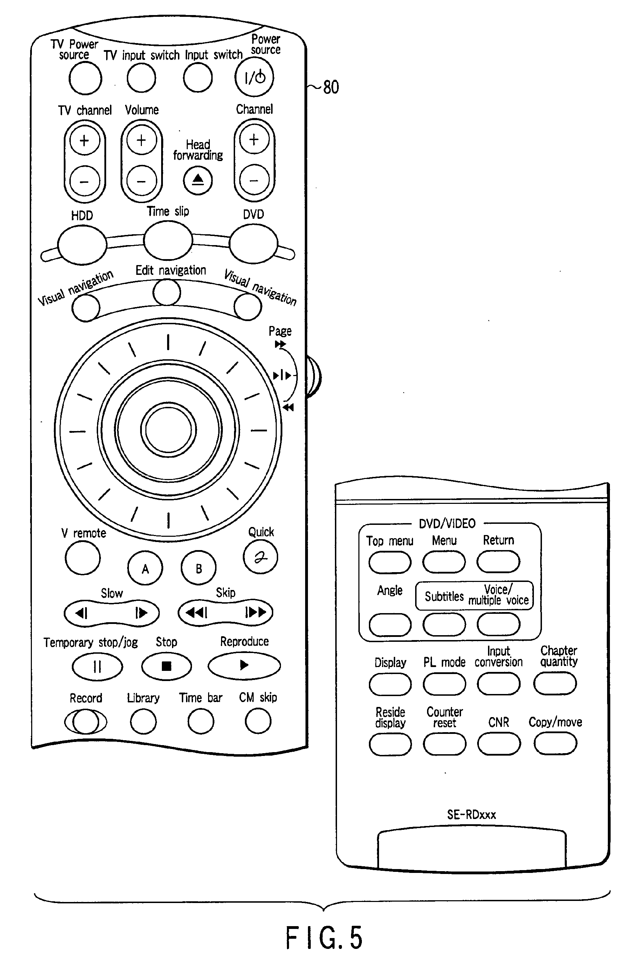

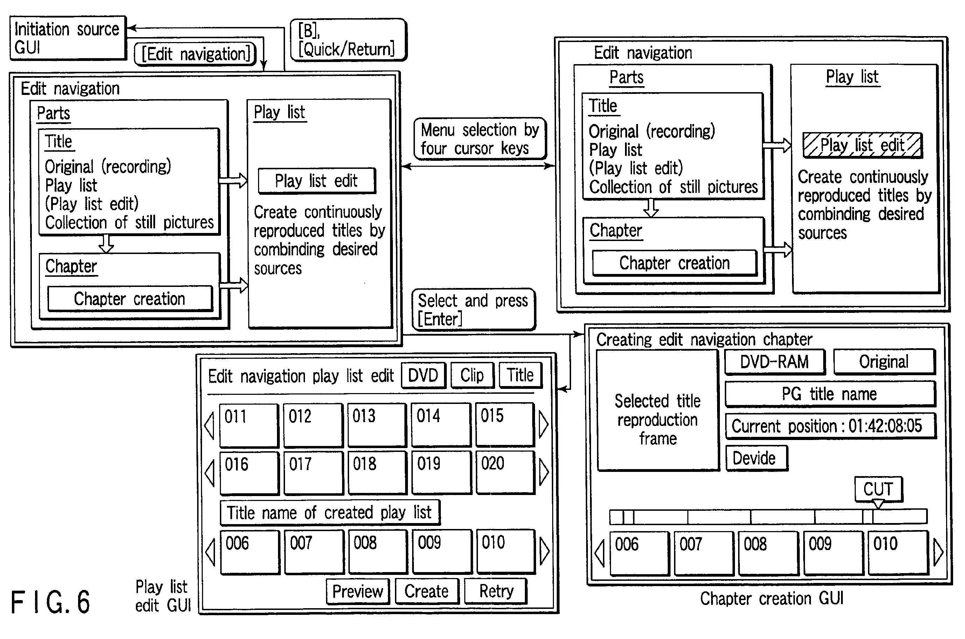

First, a screen during chapter creation will be described here. After a remote controller 80 shown in FIG. 5 is operated, when an edit navigation key is pressed, as shown in FIG. 6, items "parts", "chapters", and "play list" indicating a targeted title are displayed on a screen. Thus, a cursor is moved to a chapter item, and an Enter key is pressed.

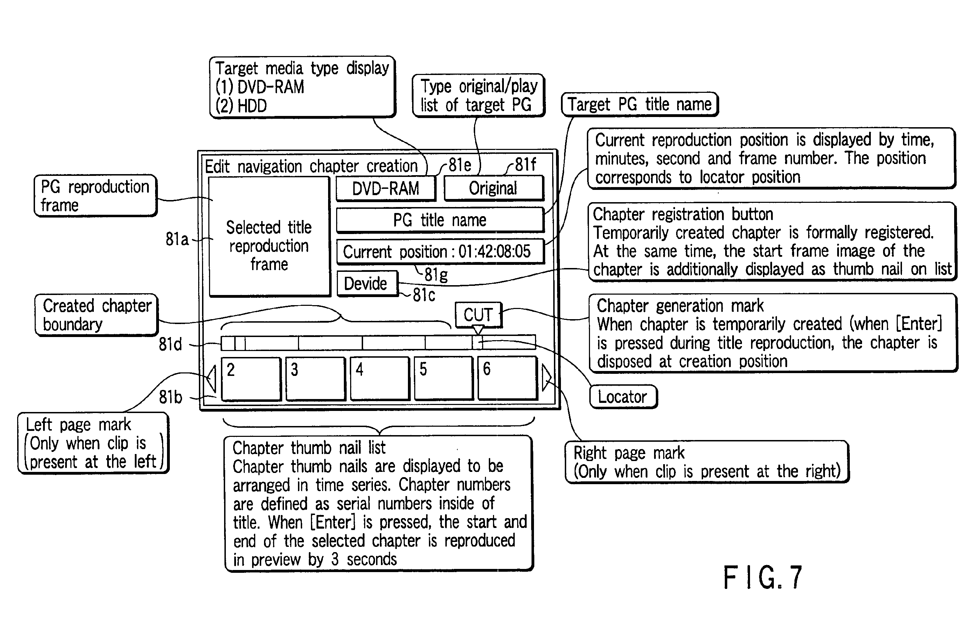

Then, the screen shown in FIG. 7 is displayed. A moving picture reproduction region 81a which dynamically displays a selected title is allocated, and a thumb nail display region 81b which displays a thumb nail which is a typical image of the start of a chapter is allocated. Further, a button region 81c for carrying out chapter registration is allocated. Furthermore, a bar shaped display region 81d is allocated in order to clarify how many chapters are created for a title.

In addition, there are allocated: a region 81e for displaying object medium; a region 81f for identifying and displaying whether a program is original (corresponding to ORG_PGC) or a play list set by a user (corresponding to UD_PGC); a region 81g indicating the current location of an image displayed in the moving picture reproduction region 81a by an elapsed time from the start of the program; and the like.

A mark corresponding to the number of chapters existing in a program is additionally displayed in the bar shaped display region 81d. The illustrative figure shows a state in which six chapters are created.

When a plurality of thumb nails are concurrently displayed in the thumb nail display region 81b, the thumb nail number is displayed in accordance with each thumb nail. The figure shows an example in which second to sixth thumb nails are displayed. In the figure, a first thumb nail is not shown. This is because the first thumb nail is scrolled and hidden caused by the presence of a limited display region.

In this embodiment, while a plurality thumb nails are displayed, a delete command is assigned with a cursor being pointed to a desired thumb nail, and the thumb nail is deleted, thereby making it possible to release a chapter. In this case, a chapter corresponding to the deleted thumb nail can be coupled with the preceding or following chapter.

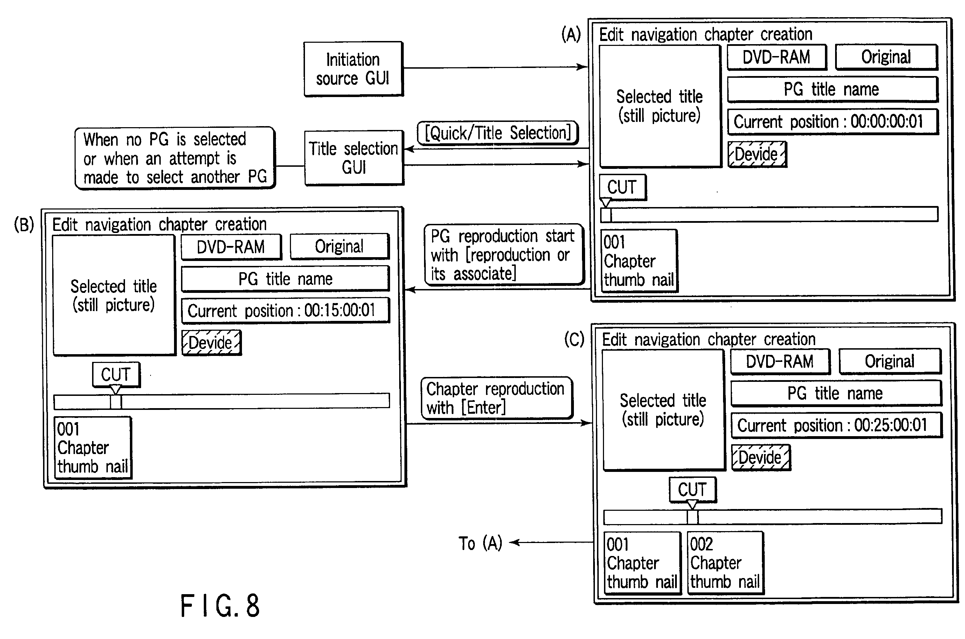

(A) to (C) shown in FIG. 8 show screen transition during chapter creation. First, as shown in (A) of FIG. 8, a title is reproduced on the moving picture reproduction region 81a at a high speed forward feeding or at a high speed backward feeding, and frame feeding operation, for example, is carried out in the vicinity of a desired image (for example, in the vicinity of the boundary of chapter).

When an image at the boundary (start) of chapter is produced, a cursor is pointed to "divide" (button region 81c), and an Enter key is operated. Then, a thumb nail which is the start image of chapter is created as shown in (B) of FIG. 8, and the first thumb nail (with number) is displayed in the thumb nail display region 81b.

Further, when an image at the boundary of chapter is produced after high speed forward feeding has been carried out, a cursor is pointed to "divide" (button region 81c), and an Enter key is operated. Then, as shown in (C) of FIG. 8, the second thumb nail corresponding to a chapter following this division point is created, and the end of the first chapter is determined. As described above, in this recording/reproducing apparatus, the chapters and thumb nails can be created one after another.

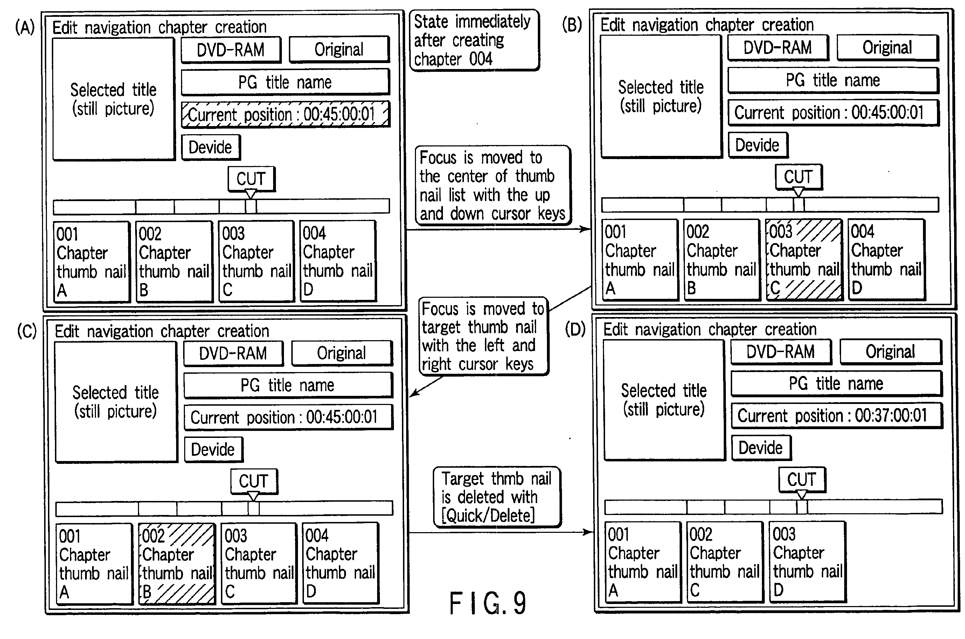

(A) to (D) shown in FIG. 9 each show screen transition when the above created chapter is deleted. For example, as shown in (A) of FIG. 9, when, while fourth thumb nails A to D are displayed in the thumb nail display region 81b, a chapter corresponding to the thumb nail B is detected a cursor is pointed to a position of the thumb nail B, as shown in (B) and (C) of FIG. 9.

When a quick key of the remote controller 80 is operated, "delete" is displayed on the screen. Thus, when an Enter key is operated after a cursor is pointed to that region, the thumb nail B is deleted as shown in (D) of FIG. 9, and an interval between the thumb nails A and C is narrowed.

When divided chapters are coupled with each other, when the quick key of the remote controller 80 is operated while a cursor is pointed to the corresponding thumb nail, "coupling with preceding chapter/coupling with following chapter" is displayed on the screen. Thus, the Enter key may be operated while a cursor is pointed to a necessary region.

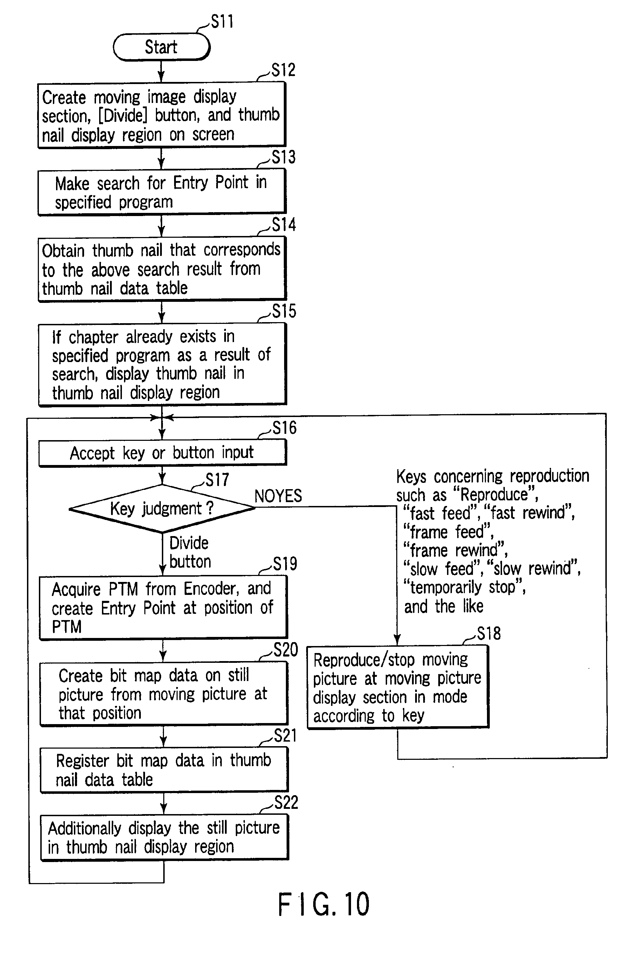

FIG. 10 is a flowchart briefly showing a chapter creating operation. First, when chapter creation is requested and started (step S11), the microcomputer block 30 displays the moving picture reproduction region 81a, the thumb nail display region 81b, the button region 81c and the like on the screen at step S12.

Next, the microcomputer block 30 makes a search for an entry point in a specified program (title) at step S13, and acquires a thumb nail corresponding to the above search result from a thumb nail data table at step S14. Then, if a chapter already exists in the specified program as a result of search, the microcomputer block 30 displays the thumb nail in the thumb nail display region 81b at step S15.

Then, the microcomputer block 30 enters an key input enable state at step S16, and judges whether the operated key is a key concerning a reproducing operation or a divide button at step S17. When the judgment result is a key concerning a reproducing operation, the microcomputer block 30 reproduces/stops a moving picture in the moving picture reproduction region 81a in a mode according to the operated key at step S18, and reverts to processing at step S16.

Further, when the judgment result is a divide button at step S17, the microcomputer block 30 creates an entry point at a position of PTM (presentation time stamp) from the encoder section 50 at step S19, and creates bit map data on a still picture from a moving picture at the above position at step S20.

After that, the microcomputer block 30 registers the generated bit map data in the thumb nail data table at step S21, displays the still picture in the thumb nail display region 18b at step S22, and reverts to processing at step S16.

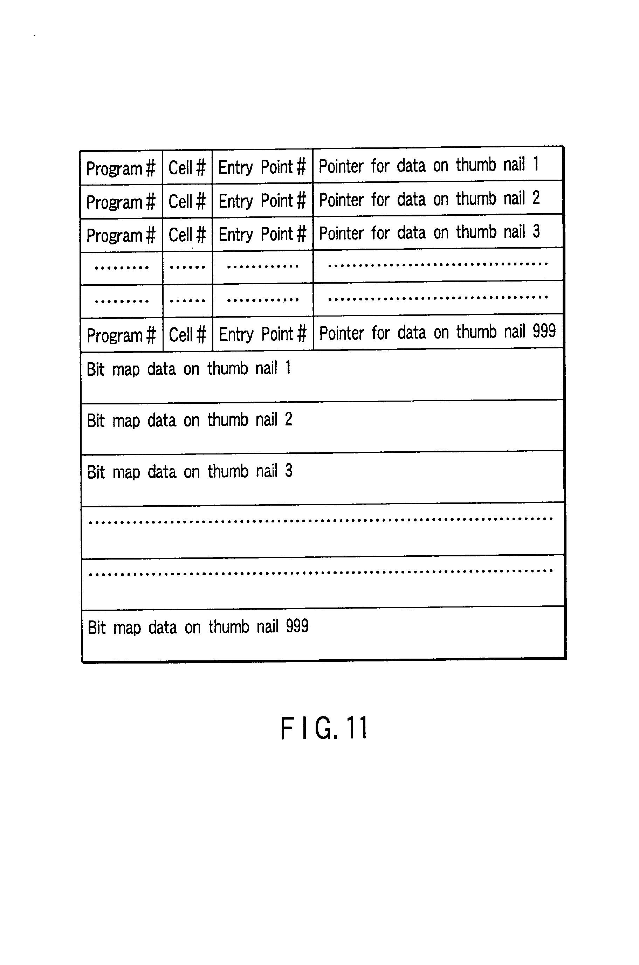

FIG. 11 shows an example of the above thumb nail data table. This thumb nail data table is divided into: a header section having arranged thereat a program number, a cell number, an entry point number, a pointer for thumb nail bit map data and the like; and a data section which stores bit map data on an actual thumb nail. Search is made by comparing the header section of the thumb nail data table with the target program number, cell number, and entry point number.

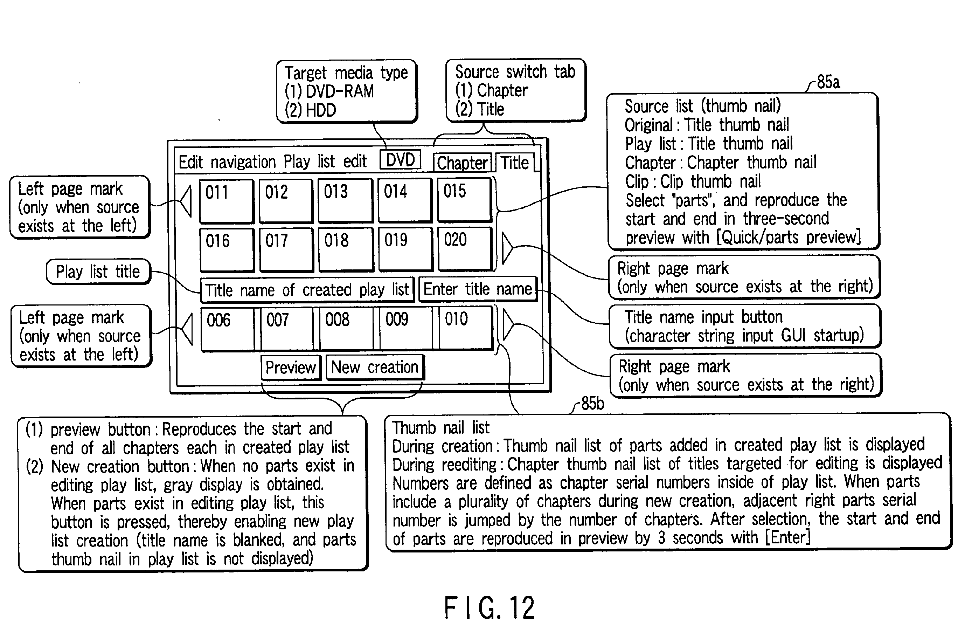

Next, a description is given with respect to a user defined play list creation guide function using the thumb nails created as described above. When an Enter key is operated while a cursor is pointed to a play list edit on the menu screen shown in FIG. 6, a number of thumb nails registered in a disk are displayed as shown in FIG. 12.

On this play list edit screen, there are allocated: a thumb nail display region 85a which displays a plurality of thumb nails as typical pictures of a plurality of programs; and a selected thumb nail display region 85b. On the selected thumb nail display region 85b, selected thumb nails can be displayed to be arranged in order of specification from among a plurality of thumb nails displayed in the thumb nail display region 85a.

Then, there is prepared play list constructing means for making an enter operation while desired selected thumb nails are displayed in the selected thumb nail display region 85b, thereby creating a new play list for reproducing programs (chapters or titles) corresponding to thumb nails each in order of arrangement of the selected thumb nails, and registering the created list as the program management information.

This play list constructing means includes means for, when a delete mode is established while desired selected thumb nails are displayed in the selected thumb nail display region 85b, deleting desired thumb nails from among the selected thumb nails, creating a new play list for reproducing programs (chapters or titles) corresponding to the remaining thumb nails, and registering the created list as the program management information.

Further, the play list constructing means also has means for, when a move mode is established while desired selected thumb nails are displayed in the selected thumb nail display region 85b, moving desired thumb nails to positions of desired orders from among the selected thumb nails, creating a new play list for reproducing programs (chapters or titles) corresponding to the order of thumb nails arranged in this state, and registering the created list as the program management information.

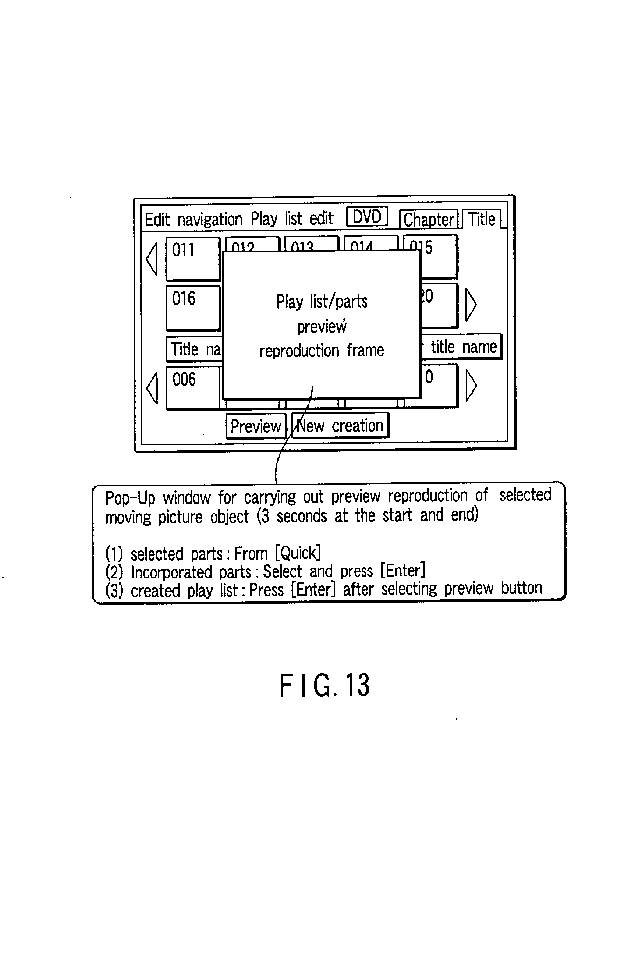

Hereinafter, a play list creation guide function will be described together with an operation on a screen. FIG. 13 shows a screen for reproducing 3 seconds of the start and end of selected parts (chapters, play list, and original) in preview. A reproduction frame at the center of the screen is displayed as a display region on the preview screen.

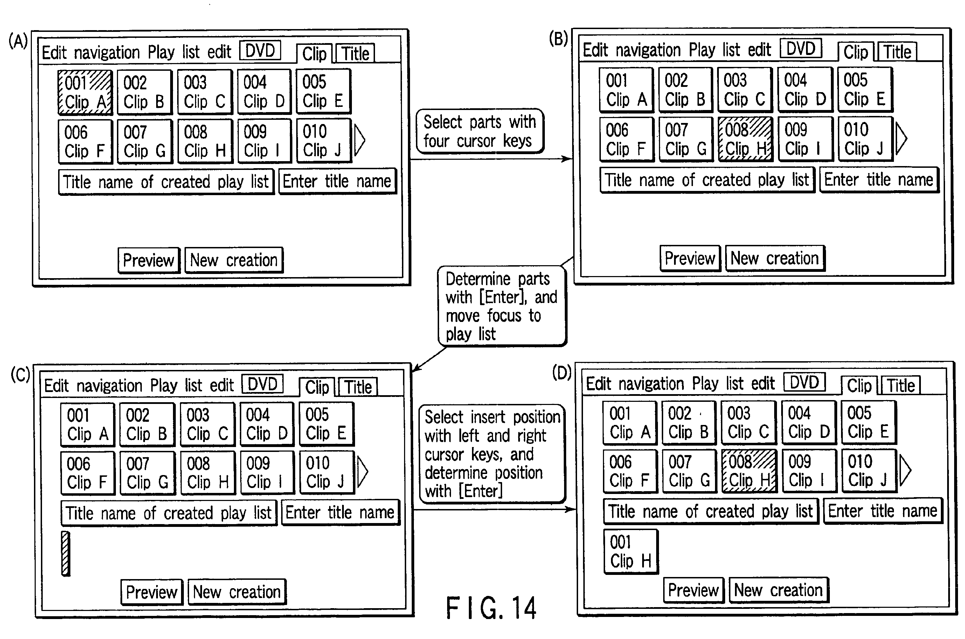

(A) to (D) shown in FIG. 14 each show a screen transition state when the selected thumb nails are added in the selected thumb nail display region 85b from among a plurality of thumb nails displayed in the thumb nail display region 85a. In the following description, on the drawings, a thumb nail is expressed as a clip, parts, or a cursor is expressed as a focus, respectively.

First, as shown in (A) and (B) of FIG. 14, a cursor is pointed to a thumb nail H desired to be selected from among a plurality of thumb nails displayed in the thumb nail display region 85a, an Enter key is operated, and the desired thumb nail is determined.

Then, as shown in (C) of FIG. 14, a cursor is moved to the selected thumb nail display region 85b, thereby determining an insert position. Then, by operating the Enter key, as shown in (D) of FIG. 14, the selected thumb nail H is added in the selected thumb nail display region 85b.

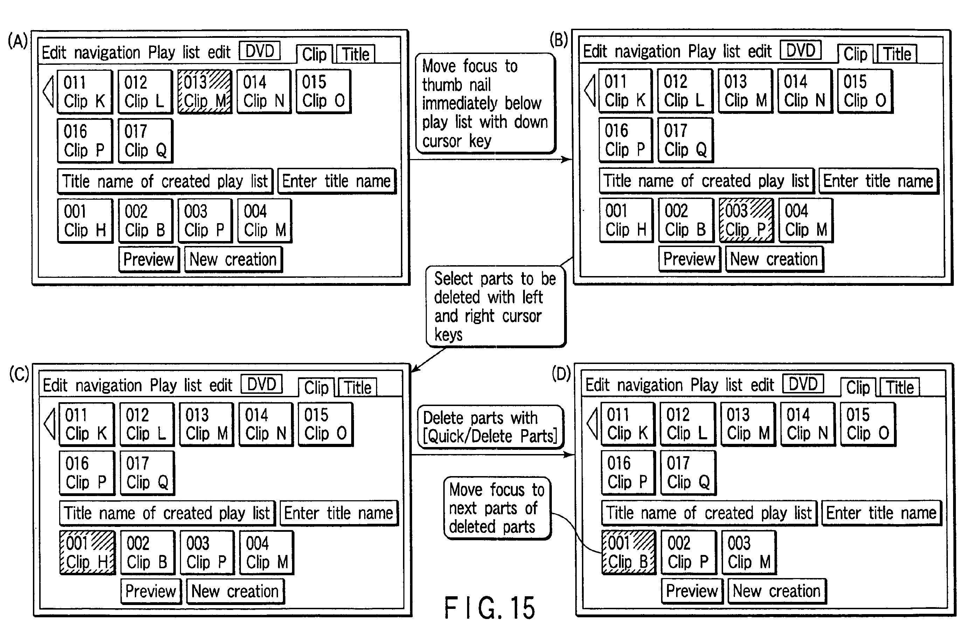

(A) to (D) shown in FIG. 15 each show a screen transition state when a desired thumb nail is deleted from thumb nails displayed in the selected thumb nail display region 85b.

First, as shown in (A) and (B) of FIG. 15, a cursor in the thumb nail display region 85a is moved to the selected thumb nail display region 85b.

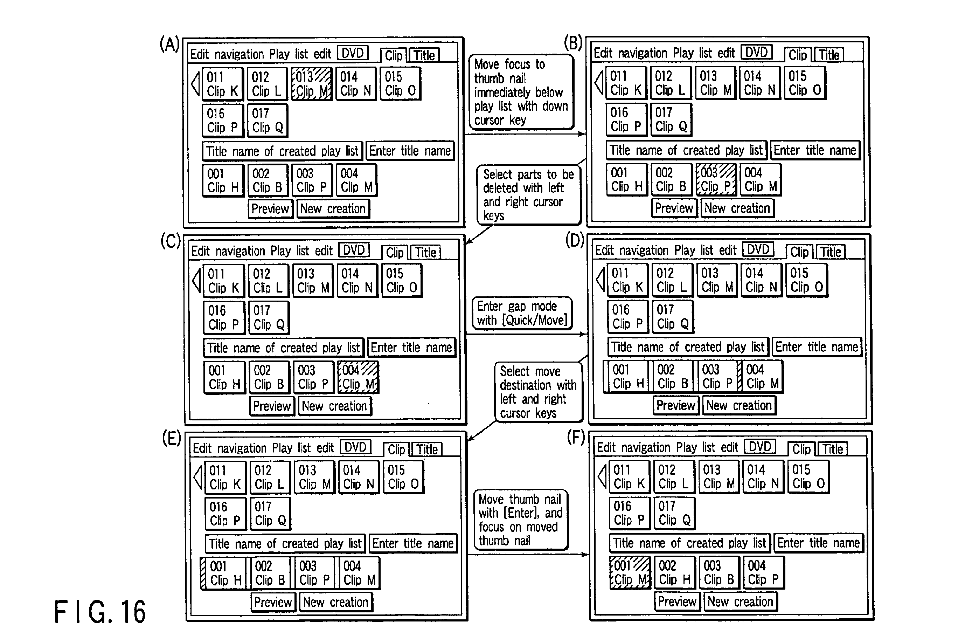

Then, as shown in (C) of FIG. 15, a cursor is pointed to a thumb nail H desired to be deleted from among a plurality of thumb nails displayed in the selected thumb nail display region 85b. By deleting parts using the quick key, the thumb nail H is deleted as shown in (D) of FIG. 15. (A) to (F) shown in FIG. 16 each show a screen transition state when moving arrangement of a plurality of thumb nails displayed in the selected thumb nail display region 85b. First, as shown in (A) and (B) of FIG. 16, a cursor in the thumb nail display state 85a is moved to the selected thumb nail display region 85b, and the cursor is pointed to a thumb nail M desired to be moved, as shown in (C) of FIG. 16.

Then, the thumb nail M to be moved by quick key movement is determined, and, as shown in (D) of FIG. 16, the cursor is changed so as to selectively indicating a gap between a plurality of thumb nails displayed in the selected thumb nail display region 85b.

Therefore, as shown in (E) of FIG. 16, the cursor is moved to a position (before thumb nail H) at which the desired thumb nail M is inserted, and an Enter key is operated, whereby the thumb nail M is moved before the thumb nail H, as shown in (F) of FIG. 16.

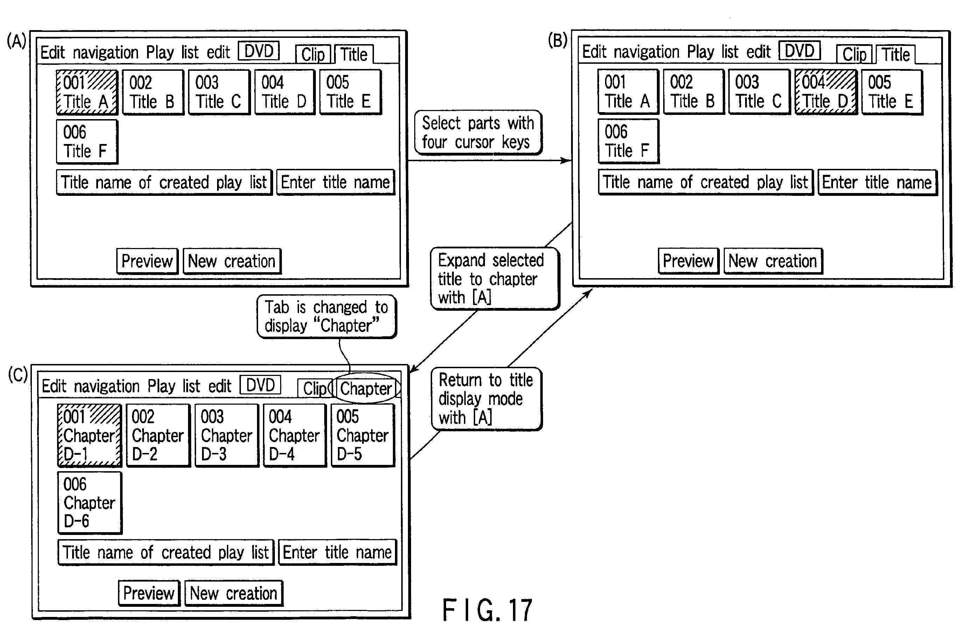

(A) to (C) shown in FIG. 17 show a screen transition state when a title thumb nail display and a chapter thumb nail display are switched from each other. First, while a plurality of title thumb nails are displayed in the thumb nail display region 85a as shown in (A) of FIG. 17, a predetermined thumb nail D are selected by moving a cursor as shown in (B) of FIG. 17.

Then, a key A of the remote controller 80 is operated, whereby a plurality of thumb nails of chapters contained in a title D are displayed as shown in (C) of FIG. 17.

In a state shown in (C) of FIG. 17, the key A is operated again, whereby the current display is changed to a thumb nail display of a title shown in (B) of FIG. 17.

The present invention is limited to the above described embodiments, and can be carried out by variously modifying it without departing from the spirit of the invention.

## Claims

1. A recording/reproducing apparatus for controlling information recording and reproducing process by driving a recording medium having at least a video information recording region in which video information including a program is recorded, a video management information recording region in which management information for recording/reproducing the video information is recorded, and a region for recording chapter management information for managing each chapter of the program, comprising:
a display signal control section outputting a display signal obtained from the video information to a display;
a first setting section setting a moving picture reproducing region for the program selected based on the video management information on a screen of the display;
a second setting section setting a thumb nail display region for displaying one or more thumb nails as a typical picture of a set chapter on the screen of the display;
a third setting section setting a button region for indicating a chapter boundary in the moving picture reproducing region during program reproduction;
a command assignment section assigning a command for specifying a chapter boundary with a cursor being moved to the button region when a desired image is displayed in the moving picture reproducing region;
a creation section creating the chapter management information for specifying the start and end of a chapter when the command for specifying a chapter boundary is assigned; and
a recording section creating an image at the start of the set chapter as a still picture, creating the thumb nail management information, and recording the created information in the recording medium.

2. The recording/reproducing apparatus according to claim 1, **characterized by** further comprising a display control section setting a bar shaped display area corresponding to a full length of said program, and additionally displaying a mark corresponding to the number of chapters that exist in said program in said bar shaped display region.

3. The recording/reproducing apparatus according to claim 1, **characterized in that** said thumb nail management information indicates an entry point of the image set as a thumb nail in said program.

4. The recording/reproducing apparatus according to claim 1, **characterized in that** said thumb nail is created independent of said program, and is recorded in said recording medium.

5. The recording/reproducing apparatus according to claim 1, **characterized in that**, when a plurality of thumb nails are displayed in said thumb nail display region, a thumb nail number is displayed in accordance with each thumb nail.

6. The recording/reproducing apparatus according to claim 1, **characterized by** further comprising a release section assigning a delete command by pointing a cursor to a desired thumb nail, and deleting the thumb nail, thereby releasing a chapter with the plurality of thumb nails being displayed.

7. A recording/reproducing apparatus for controlling information recording and reproducing process by driving a recording medium having at least a video information recording region in which video information including a program is recorded, a video management information recording region in which management information for recording/reproducing the video information is recorded, and a region for recording chapter management information for managing each chapter of the program, comprising:
display signal control means for outputting a display signal obtained from the video information to a display;
means for setting a moving picture reproducing region for the program selected based on the video management information on a screen of the display;
means for setting a thumb nail display region for displaying one ore more thumb nails as a typical picture of a set chapter on the screen of the display;
means for setting a button region for indicating a chapter boundary in the moving picture reproducing region during program reproduction;
means for assigning a command for specifying a chapter boundary with a cursor being moved to the button region when a desired image is displayed in the moving picture reproducing region;
means for creating the chapter management information for specifying the start and end of a chapter when the command for specifying a chapter boundary is assigned; and
means for creating an image at the start of the set chapter as a still picture, creating the thumb nail management information, and recording the created information in the recording medium.

8. A recording/reproducing apparatus for controlling information recording and reproducing process by driving a recording medium having at least a video information recording region in which video information including a plurality of programs is recorded, a video management information recording region management information for recording/reproducing the video information is recorded, and a region for recording program management information for managing a reproduction sequence of the program, comprising:
a display signal control section outputting a display signal obtained from the video information to a display;
a setting section setting a thumb nail display region for displaying a plurality of thumb nails as a typical picture of a plurality of programs on a screen of the display;
a thumb nail display section setting a selected thumb nail display region on the screen of the display, and displays the selected thumb nails in specified order from among a plurality of thumb nails on the region; and
a play list constructing section making an enter operation while desired selected thumb nails are displayed in the selected thumb nail display region, thereby creating a new play list for reproducing programs corresponding to each thumb nail in order of arrangement of the selected thumb nails, and registering the created play list as program management information.

9. The recording/reproducing apparatus according to claim 8, **characterized in that** said play list includes cell reproduction information.

10. The recording/reproducing apparatus according to claim 8, **characterized in that**, when a delete mode is established while desired selected thumb nails are displayed in said selected thumb nail display region, said play list constructing section deletes desired thumb nails from said selected thumb nails, creates a new play list for reproducing programs corresponding to the remaining thumb nails, and registers the created list as said program management information.

11. The recording/reproducing apparatus according to claim 8, **characterized in that**, when a move mode is established while desired selected thumb nails are displayed in said selected thumb nail display region, said play list constructing section moves desired thumb nails to positions in desired orders from among said selected thumb nails, creates a new play list for reproducing programs corresponding to the order of thumb bails arranged in this state, and registers the created list as said program management information.

12. A recording/reproducing apparatus for controlling information recording and reproducing process by driving a recording medium having at least a video information recording region in which video information including a plurality of programs is recorded, a video management information recording region in which management information for recording/reproducing the video information is recorded, and a region for recording program management information for managing a reproduction sequence of the program, comprising:
display signal control means for outputting a display signal obtained from the video information to a display;
means for setting a thumb nail display region for displaying a plurality of thumb nails as a typical picture of a plurality of programs on a screen of the display;
means for setting a selected thumb nail display region on the screen of the display, and displaying the selected thumb nails in specified order from among the plurality of thumb nails on the region; and
a play list constructing means for making an enter operation while desired selected thumb nails are displayed in the selected thumb nail display region, thereby creating a new play list for reproducing programs corresponding to each thumb nail in order of arrangement of the selected thumb nails, and registering the created play list as the program management information.
